# EUROPEAN PATENT APPLICATION

(11) **EP 4 438 516 A1**
(43) Date of publication of application: **02.10.2024**
(21) Application number: 23219724.4
(22) Date of filing: 22.12.2023
(51) Int. Cl.: B65D 43/02, B65D 39/12, B65D 75/52

(54) **COMPRESSION SEAL CONTAINER WITH WINDOW**

(30) Priority: 30.03.2023 US 202318128264
(71) Applicant: Dart Industries Inc., Orlando, Florida 32837 (US)
(72) Inventor: Clavecillas, Ryan, Florida, 32837 (US); Daelman, Katelijne, Florida, 32837 (US); Backaert, Dimitri M.C.J., Florida, 32837 (US); Byeon, Dongjin, Florida, 32837 (US); Vercruyssen, Alec, Florida, 32837 (US)
(74) Representative: Forresters IP LLP

(57) **Abstract**

A compression seal container includes a base with a cover, the cover including a seal to selectively engage with the upper rim of the base. The cover includes a core plate with a cylindrical central column and mounts a peripheral gasket. A slide plate mounts on the central column and has a periphery to engage the upper rim of the base. A grip plate also mounts on the central column. Threaded engagement of the grip plate to the central column ensures that rotation of the grip plate moves the core plate toward or away from the slide plate to cause or release compression of the gasket. The closed outer end of the central column is transparent to create a window to view contents. The threads include a pawl and detent combination to create tactile indication of the extent of operable rotation of the grip plate.

## Description

### CROSS REFERENCE TO RELATED APPLICATIONS

This application is related to co-pending attorney reference number 132134-D200, which is incorporated by reference herein.

### STATEMENT REGARDING FEDERALLY SPONSORED RESEARCH

Not applicable.

### BACKGROUND OF THE INVENTION

The present invention relates in general to storage containers having selective compression sealed covers.

It is common for such containers to provide excellent seals, but require complete opening of the container to check contents.

### SUMMARY OF THE INVENTION

An object of the present invention is to provide a container having a cover which may be selectively sealed.

Another object of the present invention is to provide a container which may be selectively sealed by manual rotation of a portion of the cover.

A further object of the present invention is to provide such a container which includes a window portion of the cover allowing the user to view the container contents without opening the container.

Yet another object of the present invention is to provide such a container which includes tactile and auditory warnings to the user to avoid unintentional disassembly of the cover during opening.

These and other objects are achieved by a compression seal container with window. The container includes a base formed to hold the contents and which presents an open rim. The container also includes a cover selectively manually secured to and removed from the base. The cover includes a core plate having a central column surrounded by a core flange extending from the bottom of the central column. The core flange has a shape corresponding to the rim of the base, preventing rotation of the core flange within the base. A slide plate is mounted to the core plate, with the slide plate allowing reciprocal movement along the longitudinal axis of the central column but preventing rotation of the slide plate around the central column. The central column includes exterior threads, and a grip plate includes an interior thread engaged therewith. With the cover resting upon the base, rotation of the grip plate will cause vertical movement of the core plate. A gasket is secured to the periphery of the core flange with a free edge abutting the slide plate. As such, vertical movement of the core plate will deform the gasket to engage or disengage from the base. The improvement comprises the core plate being formed of a transparent material, and the diameter of the central column being sufficient to form a window for viewing container contents. A further improvement is the addition of detents within the threads on the central column. The thread on the grip plate interact with these detents to provide a tactile and auditory warning to the user that continued rotation will cause disassembly.

According to one aspect of the present invention, there is provided a compression seal container, comprising:
a base having an upper rim; and
a cover mountable to and detachable from said base upper rim, said cover including:
   a core plate with a cylindrical central column having an open inner end and a closed outer end, and a core flange extending radially from said inner end, and lock threads on an outer periphery of said central column, said closed outer end being transparent and having a diameter of one centimeter or more;
   a slide plate having an outer periphery sized and shaped to engage said upper rim of said base, and a core aperture sized to receive said central column;
   a grip plate including a core sleeve sized to receive said central column, with said closed outer end of said central column visible when received in said core sleeve, said core sleeve including an internal grip thread for engaging with said lock threads, such that rotation of said grip plate with respect to said core plate will cause relative longitudinal movement of said core plate toward or away from said base; and
   a gasket mounted to one of said core flange or said slide plate, said gasket including a gasket aperture such that said gasket does not obscure said central column, said gasket capable of compression against said slide plate and radial expansion upon such compression.

Preferably, the core plate is formed as a monolithic unit completely of transparent material.

Advantageously, the grip thread includes a pawl, and said lock threads include at least one detent positioned to engage with said pawl at an unsecured position of said cover, at which unsecured position said gasket is uncompressed.

Preferably, said at least one detent is multiple detents, and said core sleeve includes pair of pawl cuts extending inwardly from an inner end of said core sleeve and positioned on opposite sides of said pawl, whereby a tab capable of elastic deformation is formed and said pawl is located on said tab.

According to another aspect of the present invention, there is provided a compression seal container, comprising:
a base having an upper rim; and
a cover mountable to and detachable from said base upper rim, said cover including:
   a core plate with a cylindrical central column having an open inner end and a closed outer end, and a core flange extending radially from said inner end, and lock threads on an outer periphery of said central column;
   a slide plate having an outer periphery sized and shaped to engage said upper rim of said base, and a core aperture sized to receive said central column;
   a grip plate including a core sleeve sized to receive said central column, with said closed outer end of said central column visible when received in said core sleeve, said core sleeve including an internal grip thread for engaging with said lock threads, such that rotation of said grip plate with respect to said core plate will cause relative longitudinal movement of said core plate toward or away from said base; and
   a gasket mounted to one of said core flange or said slide plate, said gasket including a gasket aperture such that said gasket does not obscure said central column, said gasket capable of compression against said slide plate and radial expansion upon such compression,
   wherein said grip thread further includes a pawl and said lock threads include at least one detent positioned to engage with said pawl at an unsecured position of said cover, at which unsecured position said gasket is uncompressed.

Preferably, said at least one detent is multiple detents, and said core sleeve includes pair of pawl cuts extending inward from an inner end of said core sleeve and positioned on opposite sides of said pawl, whereby a tab capable of elastic deformation is formed and said pawl is located on said tab.

Advantageously, said closed outer end is transparent and has a diameter of one centimeter or more.

### BRIEF DESCRIPTION OF THE DRAWINGS

The objects and features of the invention noted above are explained in more detail with reference to the drawings, in which like reference numerals denote like elements, and in which:
FIG. 1 is a top perspective view of a container according to the present invention in the closed configuration;
FIG. 2 is a top perspective view of a container according to the present invention in the open configuration;
FIG 3 is a side view of the container;
FIG. 4 is a top perspective exploded view of the container;

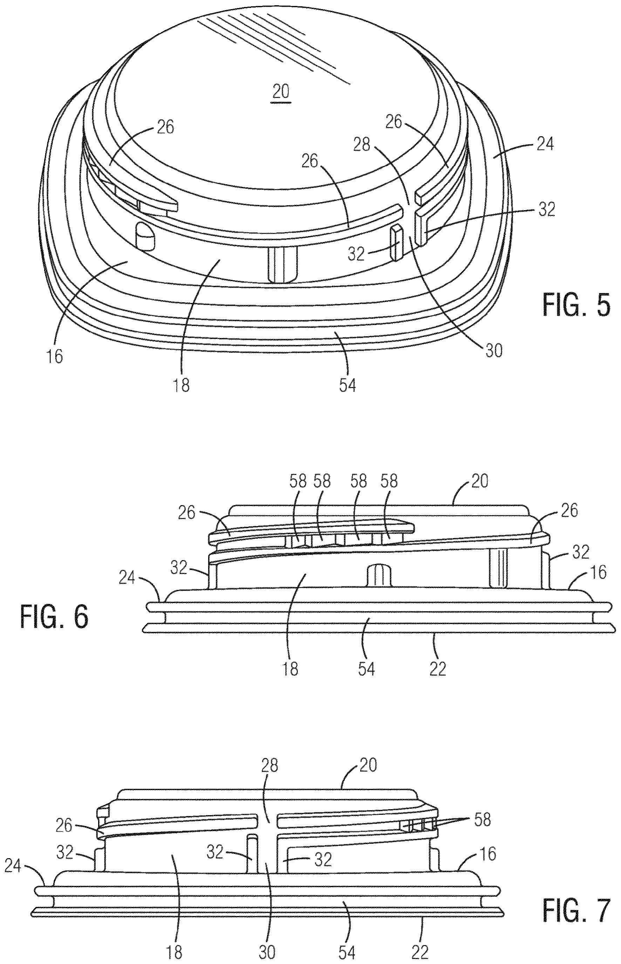

FIG. 5 is a top, front, left perspective view of a core plate;
FIG. 6 is a front view thereof;
FIG. 7 is a left side view thereof;

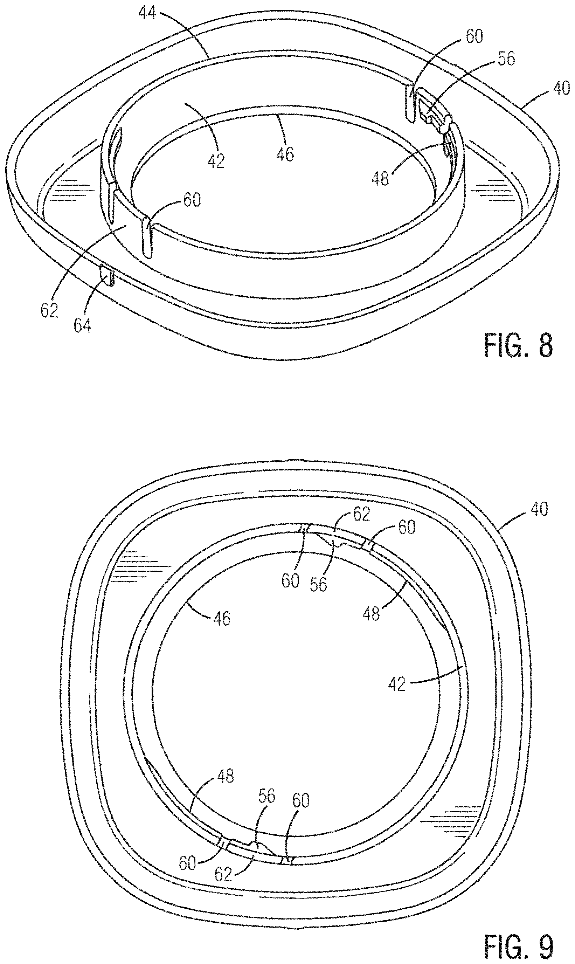

FIG. 8 is a bottom perspective view of a grip plate;
FIG. 9 is a bottom view thereof;
FIG. 10 is a top view of the container in the closed position;
FIG. 11 is a cross-sectional side along line 11-11 of Fig. 10;
FIG. 12 is a cross-sectional bottom view along line X-X of Fig. 3 in the sealed condition;
FIG. 13 is a top view of the container in the closed position;
FIG. 14 is a cross-sectional side along line 14-14 of Fig. 13;
FIG. 15 is a cross-sectional bottom view along line X-X of Fig. 3 in the unsealed condition;
FIG. 16 is a detail cross-section view from Fig. 12; and
FIG. 17 is a detail cross-section view from Fig. 15.

### DETAILED DESCRIPTION OF THE INVENTION

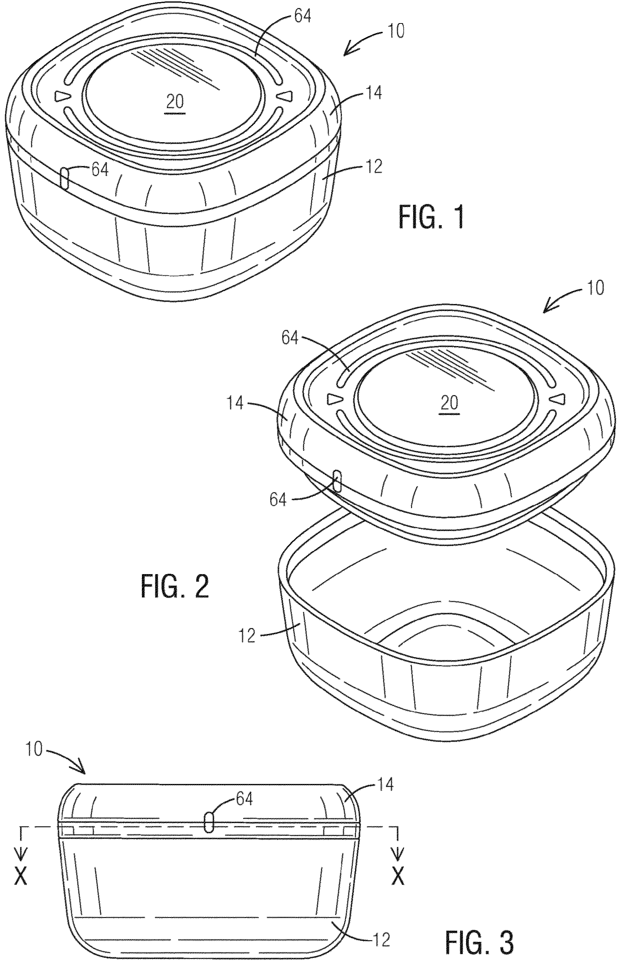

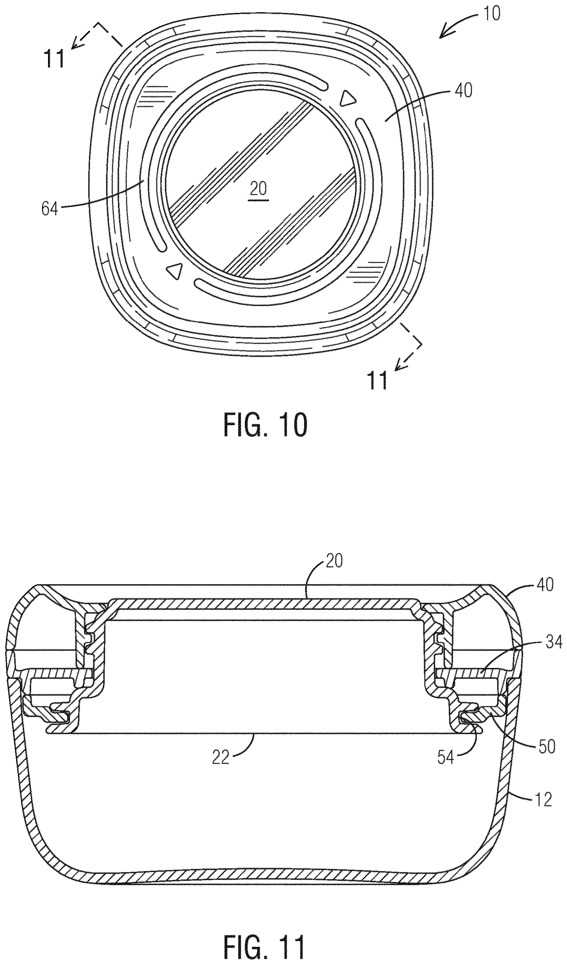

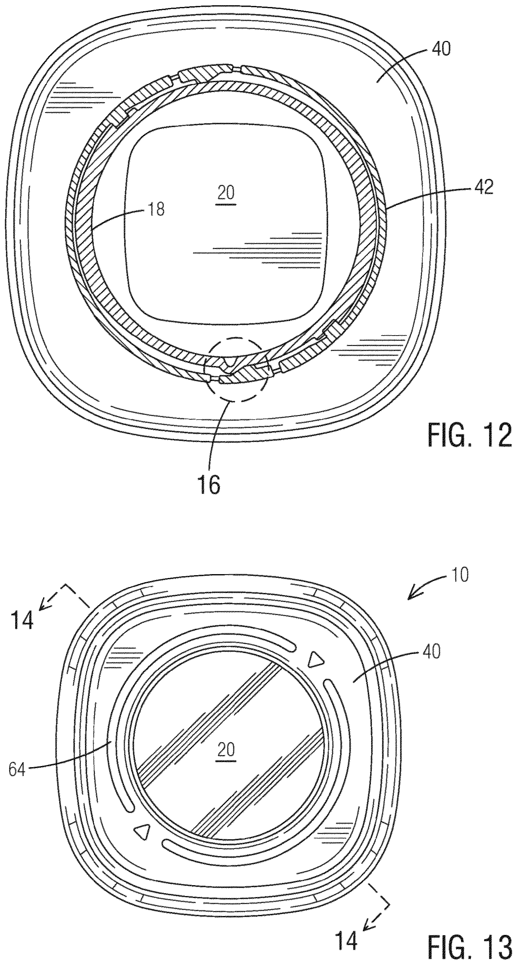

With reference to FIG. 1, a container according to the present invention is generally designated by reference numeral 10. The container 10 generally includes base 12, and a cover 14, with the cover 14 being of the compression seal variety. As is known for these types of covers, the cover 14 may be manually placed upon (Fig. 1) and removed from (Fig. 2), the base 12. While the cover is placed upon the base 12, the cover 14 may further be manually secured to (Fig. 10-12), or unsecured from (Figs. 13-15) the base 12 via compression seal.

The basic form of the container 10 is well known from the prior art. The base 10 forms an interior to hold the container contents. The cover 10 includes a plate which may reciprocate with respect to the remainder of the cover, and this reciprocation will compress or expand a peripheral gasket. Compression of the gasket will seal the cover to the base and prevent manual removal of the cover; expansion of the gasket will release the cover from the base and allow manual removal of the cover. An example of this basic concept is shown in US 2,462,445 to Weiss. The present invention improves upon this concept.

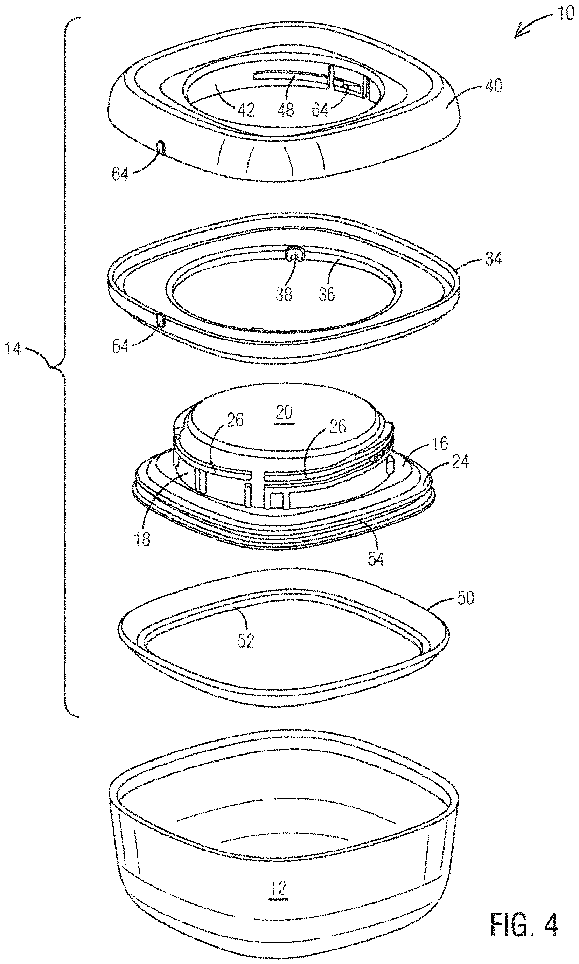

The cover 14 components are best illustrated in Fig. 4. The cover 14 includes a core plate 16 comprised of a central column 18 having longitudinal outer and inner ends 20 and 22, respectively. The outer end 20 of central column 18 is a closed end, while the inner end 22 is open, to allow the molding. The core plate 16 further includes a core flange 24 extending radially from the central column at or near the inner end 22. The exterior of the central column 18 includes a set of lock threads 26, with the lock threads being interrupted by a slide gap 28 leading to a slide guide 30 formed by a pair of raised slide walls 32 located longitudinally between the lock threads 26 and the core flange 24. In the preferred embodiment shown, there are two complete sets of elements 28/30/32, each located at diametrically opposed locations on the central column 18. If desired, a single set of such elements 28/30/32 could be used, or three, or four, etc.

In the embodiment shown, the base 12 includes a rim having a generally square shape, and the core flange 24 has an outer peripheral shape which generally corresponds to, but is smaller than, that of the base rim. Other geometric shapes are possible, such as rectangular, oval, triangular, round, etc., but polygons preventing relative rotation between the core flange and the base are preferred. All that is technically required is that the core flange 24 be received within the rim of base 12 when the cover 14 is placed upon the base 12.

The cover 14 further includes a slide plate 34 having a generally planar form but including a core aperture 36 sized to receive the central column 18, its lock threads 26 and slide walls 32 therein with a sliding fit. The slide plate 34 further includes a slider 38 extending radially inward of core aperture 36 and having a length to be received between said slide walls 32 but avoid contact with the central column 18. As may be envisioned, the slide plate 34 may be mounted upon the core plate 16 by inserting the central column 18 into the core aperture 36, with the slide plate 34 oriented such that the slider 38 passes through the slide gap 28 and then between the slide walls 32. This will allow slide plate 34 to reciprocate vertically (along the longitudinal axis of central column 18) while preventing relative rotation of slide plate 34 with respect to core plate 16 (bout the longitudinal axis of central column 18).

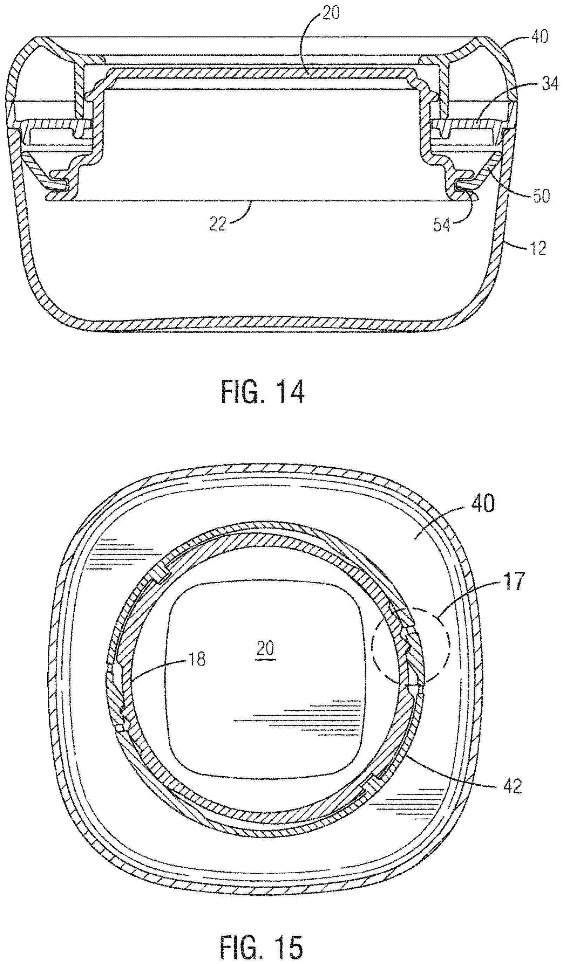

In the embodiment shown, the base 12 includes a rim having a generally square shape, and the slide plate 34 has an outer peripheral shape which generally corresponds to, but is larger than, that of the rim of base 12 such that the slide plate 34 rests upon the rim of base 12. Further, as best illustrated in Figs. 11 and 14, the slide plate 34 may include a flange extending vertically downward to fit closely within the rim of base 12. This resting of slide plate 34 on the rim of base 12 is not required (as illustrated by the prior art of Weiss '445) but is preferred to prevent relative rotation between the cover 14 and base 12. As with the core flange 24, other geometric shapes are possible such as rectangular, oval, round, etc., but polygons preventing relative rotation between the slide plate 34 and the base 12 are preferred.

Cover 14 further includes a grip plate 40 including a core sleeve 42 having an inner end 44 and an outer end 46. As with the core aperture 36, the core sleeve 42 is sized to receive the central column 18, its lock threads 26 and slide walls 32 therein with a sliding fit. The core sleeve 42 further includes an interior grip thread 48 adapted to mate with the lock threads 26 on the central column 18.

As may be envisioned, inserting the central column 18 with in the core sleeve 42 will permit engaging the grip thread 48 with the lock threads 26, at which point the inner end 44 of core sleeve 42 will be spaced from the slide plate 34. Relative rotation of the grip plate 40 about the central column with the threads 48 and 26 engaged will force relative vertical movement along the longitudinal axis of the central column 18 and force the inner end of core sleeve 42 to move towards slide plate 34. Continued rotation will cause continued vertical movement until the inner end 44 of core sleeve 42 abuts the slide plate 34. Opposite relative rotation will result in opposite vertical movement of the inner end 44 away from the slide plate 34 until the threads 48 and 26 eventually disengage.

As shown best in Figs. 1-3, it is preferred that the grip plate 40 has an outer periphery which substantially matches that of slide plate 34 when in at least one of the secured and unsecured positions, and preferably the peripheries match in both of the secured and unsecured positions. In a similar manner the periphery of the core plate 16 (which itself generally matches that of the rim of base 12) has a peripheral shape similar to that of (and aligned with) the slide plate 34.

The final component of cover 14 is gasket 50. The gasket 50 is secured to the core plate 16 to extend radially outward from the periphery of core plate 16. For this reason is typically preferred that the gasket 50 is secured to the core flange 24. The gasket 50 also includes a gasket aperture 52 having a size and position so as to not obscure the central column 18. This may be achieved in a number of ways.

In one configuration (not shown) the gasket 50 could have a circular gasket aperture 52 substantially matching the diameter of central column 18, with the gasket 50 being mounted to manually rest upon the outer face of core plate 16 adjacent the inner end 22 of central column 18. In another configuration (not shown) the gasket could be similarly formed with a circular gasket aperture 52 but the gasket 50 is secured to the inner face of the core flange 24 (as by molding, adhesive or interlocking elements).

The preferred arrangement as shown is to form the gasket 50 as a continuous closed strip of material with the gasket aperture 52 having a size and shape similar to that of the periphery of core flange 24. For example, as best shown in Fig. 4 the rim of base 12 is generally square and as such the gasket 50 is generally square, and the gasket aperture 52 is generally square to match the generally square periphery of the core flange 24.

The gasket 50 in this form may also be secured to the core plate 16 in various ways. In the preferred embodiment, the core flange 24 includes a peripheral gasket groove 54 which receives the inner edge of gasket aperture 52 as best illustrated in Figs. 11 and 14. Other arrangements are possible. For example, the arrangement shown could be reversed, with the inner edge of gasket aperture 52 including a groove which receives the outer edge of core flange 24 (not shown). Alternatively, the gasket 50 could be molded to, or adhesively secured to, the core plate 16 (not shown). It is also possible to secure the gasket to the slide plate rather than the core plate; the only requirement is that compression of the gasket results in radial expansion as is known in the art. The arrangement shown is preferred, however, to permit removal of the gasket 50 for cleaning or replacement.

In the preferred form, the gasket 50 has a free outer edge which angles outward toward the slide plate 34. As illustrated in Fig. 14, when the cover 14 is in the unsecured position the gasket 50 is undeformed. However, as the grip plate 40 is rotated into the secured position to draw the core plate 16 outward, the gasket 50 contacts and compresses against the slide plate 34. This compression causes the gasket 50 to deform radially outward. This radial deformation of the gasket 50 brings the gasket 50 into contact with the rim of base 12, serving to seal the cover 14 to the base 12. Similarly, rotating the grip plate 40 in the opposite direction to the unsecured position forces the core plate 16 inward to reduce and eventually eliminate compression of the gasket 50. The gasket 50 is no longer deformed radially outward, and the cover 14 is released from the base 12.

The radially outward deformation of the gasket 50 may be achieved by several other gasket forms known in the art. For example, gaskets formed as annular rings and a variety of other cross-sectional forms (not shown) may be employed.

While certain features above are new and innovative, one innovation of particular note is the formation of a container window with the core plate 16. In particular, the outer end 20 of central column 18 forms a window allowing visual inspection of the contents of container 10 even while the cover 14 is in place upon the base 12. This is achieved by three features. First, the core plate 16 (including the closed outer end 20) is monolithically formed as a single piece of transparent material. Second, the gasket 50 includes the gasket aperture 52 which does not block or overlie the central column 18. Finally, the central column 18 has a diameter sufficient for the transparent closed outer end 20 to act as a window, which is a diameter of greater than 1 centimeter.

As may be seen from a comparison of Figs. 1 and 10, with the closed outer end 20 formed of transparent plastic, the user may easily see into the interior of container 10 to visually inspect the contents. In the preferred form, the diameter of outer end 20 is greater than the minimum 1cm, and is preferably about 3cm or greater. This placement of a window in the cover 14 not only is convenient for contents inspection, but also allow for greater design freedom in the container 10. For example, without a window in cover 14 there is a strong desire to form the base 12 of a transparent or translucent material for contents inspection. With the window in cover 14, the base 12 may be formed opaque which opens a wide range of design options for container 10.

Another innovation of particular note is the addition of an auditory and tactile warning for rotation of grip plate 40 beyond the unsecured position. The grip plate 40 must be capable of threaded engagement with the core plate 16 for assembly of the cover. However, this also allows for the grip plate 40 to be disengaged from the core plate 16 by opposite rotation. This is to be avoided during normal operation. The auditory and tactile warning for rotation beyond the unsecured position helps prevent this. For this feature, a portion of the forward end of grip thread 48 has a greater radial depth to form a pawl 58, and lock threads 26 have a radial depth sufficient to receive this pawl. As may be envisioned, the remainder of the grip thread 48 will continue to operatively engage with the lock threads 26, just at a radial depth less than that of the pawl 58.

A second required feature for the warning is to include at least one, and preferably multiple, detents 58 within the lock threads 26. The detents 58 (and pawl 56) are sized to permit the pawl 56 to ride over the detents 58 by elastic deformation of the components (and typically the core sleeve 42). The elastic deformation is typically rather strong, and results in an auditory click and tactile shock each time the pawl 56 clears one of the detents 58. The movement of the pawl 56 over the detents is required to allow the grip plate 40 to be assembled to the core plate 16. However, the pawl 56 will also ride over the detents 58 as it is disassembled. The auditory and tactile indication of the pawl 56 riding over the detent(s) 58 thus provide the user with a warning that disassembly will occur with further rotation and allows the user to consciously stop further rotation of the grip plate 40 to prevent unintended disassembly.

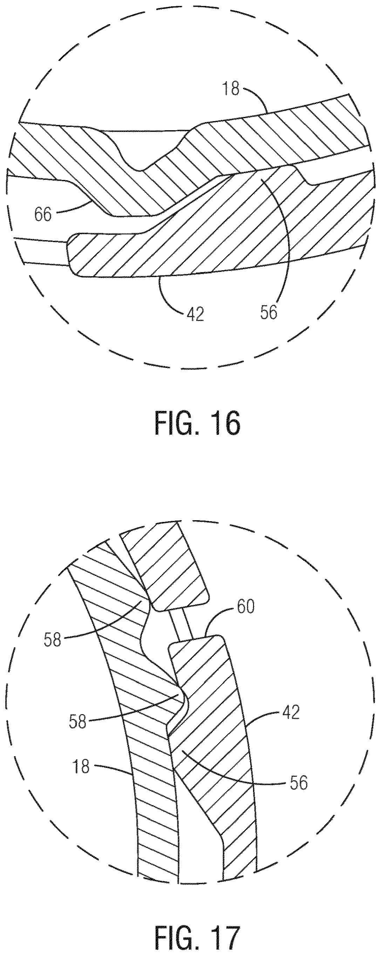

In the embodiment shown, there are four detents 58 provided within the lock threads 26. While a single detent could be used, the four detents are believed to provide a greater warning. Further, the engagement of the pawl 56 against a detent 58 (Fig. 16) serves to make continued rotation of the grip plate 40 more difficult. This in itself may serve as tactile warning to stop rotation of the grip plate 40. If not, then the tactile and auditory warning of the pawl 56 passing over the first detent 58 further cautions the user, and at the same time the engagement of the pawl 56 with the second detent 58 again provides a tactile deterrent to further rotation of the grip plate 40. This is repeated for second and third warning with the second and third detent 58, which is believed to make clear to the user that disassembly is imminent and to stop rotation is that is not desired. The fourth and final detent 58 ensures the user is consciously continuing rotation and desires to disassemble the grip plate 40. Again, a single detent 58 is possible, as are two, three, four or more.

The elastic deformation necessary for the pawl 56 to ride over the detent(s) 58 may be difficult to achieve with the materials desired for the core sleeve 42. For example, in the embodiment shown, the entirety of the grip plate 40, including core sleeve 42 and grip thread 48 are monolithically formed as by injection molding. As best shown in Fig. 4, to improve the elastic deformation, it is preferred to provide the core sleeve 42 with a pair of pawl cuts 60 extending from the outer end 46 of the core sleeve 42 to and including each end of the pawl 56. As may be envisioned, the portion of core sleeve 42 between the pawl cuts 60 forms a separate tab 62 which may deform separately from the remainder of the core sleeve 42. This allows the pawl 56 on tab 62 to deform over the detents 58 without deformation of the remainder of the core sleeve 42 and thus prevents any binding of the core sleeve 42 on central column 18.

As noted, it is preferred for the grip plate 40 to have a shape corresponding to the slide plate 34. This improves the aesthetics of the cover 14 when these are aligned, and since the slide plate 34 matches the rim of base 12, it also improves the aesthetics of the entire container 10. As shown in Figs. 10 and 13, it is preferred that the grip plate 40 be aligned with the slide plate 34 and base 12 at both of the unsecured and the secured positions. Rotation between these positions will thus result in misalignment which provides a visual indication to the user of the secured/unsecured/intermediate condition of the container 10.

Since the secured and the unsecured condition are both aligned and appear generally quite similar, the closed outer end 20 of central column 18, or the visible outer periphery of the slide plate 34, together with the grip plate 40, may include indicia to indicate which is the secured and which is the unsecured configuration. An example is shown in figs 1-3, the grip plate 40 and slide plate 34 may both include indicia 64 to indicate the unsecured position.

The alignment of the cover components, and/or the indicia 64, and/or the abutment of the pawl 56 against the first detent 58 should be sufficient for the user to recognize the unsecured position. Rotation of the grip plate toward the secured position will bring the cover components out of alignment. When the cover components again achieve alignment, this should be an indication to the user of the secured position and that rotation should stop. To ensure this, the lock threads 26 may include a stop detent 66 at a position to abut the pawl 56 when the grip plate 40 has reached the secured position. This is illustrated in Fig. 17.

From the foregoing it will be seen that this invention is one well adapted to attain all ends and objects set forth above together with the other advantages which are inherent within its structure.

It will be understood that certain features and sub-combinations are of utility and may be employed without reference to other features and sub-combinations. This is contemplated by and is within the scope of the claims.

Since many possible embodiments may be made of the invention without departing from the scope thereof, it is to be understood that all matter herein set forth of shown in the accompanying drawings is to be interpreted as illustrative, and not in a limiting sense.

## Claims

1. A compression seal container, comprising:
a base having an upper rim; and
a cover mountable to and detachable from said base upper rim, said cover including:
a core plate with a cylindrical central column having an open inner end and a closed outer end, and a core flange extending radially from said inner end, and lock threads on an outer periphery of said central column, said closed outer end being transparent and having a diameter of one centimeter or more;
a slide plate having an outer periphery sized and shaped to engage said upper rim of said base, and a core aperture sized to receive said central column;
a grip plate including a core sleeve sized to receive said central column, with said closed outer end of said central column visible when received in said core sleeve, said core sleeve including an internal grip thread for engaging with said lock threads, such that rotation of said grip plate with respect to said core plate will cause relative longitudinal movement of said core plate toward or away from said base; and
a gasket mounted to one of said core flange or said slide plate, said gasket including a gasket aperture such that said gasket does not obscure said central column, said gasket capable of compression against said slide plate and radial expansion upon such compression.

2. A container as in Claim 1, wherein said core plate is formed as a monolithic unit completely of transparent material.

3. A container as in Claim 1 or Claim 2, wherein said grip thread includes a pawl, and said lock threads include at least one detent positioned to engage with said pawl at an unsecured position of said cover, at which unsecured position said gasket is uncompressed.

4. A container as in Claim 3, wherein said at least one detent is multiple detents, and wherein said core sleeve includes pair of pawl cuts extending inwardly from an inner end of said core sleeve and positioned on opposite sides of said pawl, whereby a tab capable of elastic deformation is formed and said pawl is located on said tab.

5. A compression seal container, comprising:
a base having an upper rim; and
a cover mountable to and detachable from said base upper rim, said cover including:
a core plate with a cylindrical central column having an open inner end and a closed outer end, and a core flange extending radially from said inner end, and lock threads on an outer periphery of said central column;
a slide plate having an outer periphery sized and shaped to engage said upper rim of said base, and a core aperture sized to receive said central column;
a grip plate including a core sleeve sized to receive said central column, with said closed outer end of said central column visible when received in said core sleeve, said core sleeve including an internal grip thread for engaging with said lock threads, such that rotation of said grip plate with respect to said core plate will cause relative longitudinal movement of said core plate toward or away from said base; and
a gasket mounted to one of said core flange or said slide plate, said gasket including a gasket aperture such that said gasket does not obscure said central column, said gasket capable of compression against said slide plate and radial expansion upon such compression,
wherein said grip thread further includes a pawl and said lock threads include at least one detent positioned to engage with said pawl at an unsecured position of said cover, at which unsecured position said gasket is uncompressed.

6. A container as in Claim 5, wherein said at least one detent is multiple detents, and wherein said core sleeve includes pair of pawl cuts extending inward from an inner end of said core sleeve and positioned on opposite sides of said pawl, whereby a tab capable of elastic deformation is formed and said pawl is located on said tab.

7. A container as in Claim 5 or Claim 6, wherein said closed outer end is transparent and has a diameter of one centimeter or more.

## Amended claims

### Amended claims in accordance with Rule 137(2) EPC.

1. A compression seal container (10), comprising:
a base (12) having an upper rim; and
a cover (14) mountable to and detachable from said base upper rim, said cover including:
a core plate (16) with a cylindrical central column (18) having an open inner end (22) and a closed outer end (20), and a core flange (24) extending radially from said inner end, and lock threads (26) on an outer periphery of said central column, said closed outer end being transparent and having a diameter of one centimeter or more;
a slide plate (34) having an outer periphery sized and shaped to engage said upper rim of said base, and a core aperture (36) sized to receive said central column;
a grip plate (40) including a core sleeve (42) sized to receive said central column, with said closed outer end of said central column visible when received in said core sleeve, said core sleeve including an internal grip thread (48) for engaging with said lock threads, such that rotation of said grip plate with respect to said core plate will cause relative longitudinal movement of said core plate toward or away from said base; and
a gasket (50) mounted to one of said core flange or said slide plate, said gasket including a gasket aperture (52) such that said gasket does not obscure said central column, said gasket capable of compression against said slide plate upon longitudinal movement of said core plate toward said base, said compression resulting in radial expansion of said gasket, said radial expansion configured to bring said gasket into contact with said upper rim of said base and seal said cover to said base.

2. A container (10) as in Claim 1, wherein said core plate (16) is formed as a monolithic unit completely of transparent material.

3. A container (10) as in Claim 1 or Claim 2, wherein said grip thread (48) includes a pawl (56), and said lock threads (26) include at least one detent (58) positioned to engage with said pawl at an unsecured position of said cover (14), at which unsecured position said gasket (50) is uncompressed.

4. A container (10) as in Claim 3, wherein said at least one detent (58) is multiple detents, and wherein said core sleeve (42) includes pair of pawl cuts (60) extending inwardly from an inner end (44) of said core sleeve and positioned on opposite sides of said pawl (56), whereby a tab (62) capable of elastic deformation is formed and said pawl is located on said tab.

5. A compression seal container (10), comprising:
a base (12) having an upper rim; and
a cover (14) mountable to and detachable from said base upper rim, said cover including:
a core plate (16) with a cylindrical central column (18) having an open inner end (22) and a closed outer end (20), and a core flange (24) extending radially from said inner end, and lock threads (26) on an outer periphery of said central column;
a slide plate (34) having an outer periphery sized and shaped to engage said upper rim of said base, and a core aperture (36) sized to receive said central column;
a grip plate (40) including a core sleeve (42) sized to receive said central column, with said closed outer end of said central column visible when received in said core sleeve, said core sleeve including an internal grip thread (48) for engaging with said lock threads, such that rotation of said grip plate with respect to said core plate will cause relative longitudinal movement of said core plate toward or away from said base; and
a gasket (50) mounted to one of said core flange or said slide plate, said gasket including a gasket aperture (52) such that said gasket does not obscure said central column, said gasket capable of compression against said slide plate upon longitudinal movement of said core plate toward said base, said compression resulting in radial expansion of said gasket, said radial expansion configured to bring said gasket into contact with said upper rim of said base and seal said cover to said base,
wherein said grip thread further includes a pawl (56) and said lock threads include at least one detent (58) positioned to engage with said pawl at an unsecured position of said cover, at which unsecured position said gasket is uncompressed.

6. A container (10) as in Claim 5, wherein said at least one detent (58) is multiple detents, and wherein said core sleeve (42) includes pair of pawl cuts (60) extending inward from an inner end (44) of said core sleeve and positioned on opposite sides of said pawl (56), whereby a tab (62) capable of elastic deformation is formed and said pawl is located on said tab.

7. A container (10) as in Claim 5 or Claim 6, wherein said closed outer end (20) is transparent and has a diameter of one centimeter or more.
